# EUROPEAN PATENT APPLICATION

(11) **EP 4 607 903 A1**
(43) Date of publication of application: **27.08.2025**
(21) Application number: 24159129.6
(22) Date of filing: 22.02.2024
(51) Int. Cl.: H04M 1/7243, H04M 1/72409, H04M 1/72412

(54) **NOTIFICATION GENERATION METHOD AND SYSTEM FOR RESOURCE-CONSTRAINED DEVICE**

(71) Applicant: CSEM Centre Suisse d'Electronique et de Microtechnique SA - Recherche et Développement, 2002 Neuchâtel (CH)
(72) Inventor: BEN SALAH, Mohammed Ismail, 2610 St-Imier (CH); KOLLER, Jean-Marc, 1400 Yverdon-les-Bains (CH); SÉNÉCLAUZE, Martin, 2054 Chézard-St-Martin (CH)
(74) Representative: P&TS SA (AG, Ltd.)

(57) **Abstract**

The present invention relates to a computer-implemented method for offloading notification processing comprising the steps of:
receiving an electronic communication on a mobile processing device;
generating a notification on the mobile processing device based on the electronic communication;
generating a notification image on the mobile processing device based on the notification;
transmitting the notification image from the mobile processing device to a resource-constrained device through a wireless network;
displaying the notification image on a display of the resource-constrained device.

It also relates to a system for offloading notification processing adapted to carry out the method above.

## Description

### Technical domain

The present invention concerns a computer-implemented method and a system for generating notifications for resource-constrained devices.

### Related art

The rise of resource-constrained devices has recently been driven by a number of factors, including the growth of the loT, the expansion of edge computing, cost considerations, a focus on energy efficiency, advances in miniaturisation, and the ubiquity of connectivity technologies. These devices are designed for specific tasks with limited resources to balance functionality, efficiency and cost.

Due to their resource-constrained nature, these devices typically have low processing capacities caused by hardware limitations and/or limited autonomy in terms of power supply. This shortage in processing abilities severely contrasts with the increasing number of functionalities provided by modern telecommunication systems which can be demanding in terms of computing power and/or power use.

The hardware limitations of resource-constrained devices may, for example, result in low on-board memory capacity that prevents the device from storing data that can be used to display or process communications to the user. Typical electronic messages typically contain, in addition to structured text elements, a large number of glyphs and images that need to be stored on the device in order to be fully or partially displayed to the user. In addition, some alphabets require special text processing within the terminal to display the original text correctly. For example, Arabic and Hebrew include glyphs (letters, accents, etc.) that are position dependent, which makes the text processing more computationally intensive, but also requires more memory to store all the glyphs required.

Although resource-constrained devices may not be designed to display the full content of an electronic message such as an SMS, email or instant message, they typically support at least a notification service that alerts the user of the resource-constrained device that an electronic communication has been received.

Such notifications may include various forms of visual information, such as structured/unstructured text, a fraction of the content of the communication, a logo, an image, etc. The processing cost of generating such a notification may therefore be too high for this action to be performed on a resource-constrained device without compromising its autonomy and/or processing capabilities.

### Short disclosure of the invention

An aim of the present invention is the provision of a method and a system for notification processing on a resource-constrained device that overcomes the shortcomings and limitations of the state of the art.

Another aim of the invention is to provide a method and a system allowing a resource-constrained device to display a wider range of notifications.

Another aim of the invention is to provide a method and a system increasing the autonomy of resource-constrained devices capable of displaying notifications.

According to the invention, these aims are attained by the object of the attached claims, and especially by a computer-implemented method for offloading notification processing comprising the steps of:
receiving an electronic communication by a mobile processing device;
generating a notification by the mobile processing device based on the electronic communication for notifying a user of the mobile processing device that the electronic communication has been received on the mobile processing device;
generating a notification image by the mobile processing device based on the notification;
transmitting the notification image from the mobile processing device to a resource-constrained device through a wireless network;
displaying the notification image on a display of the resource-constrained device so as to notify a user of the resource-constrained device that a notification has been received on the mobile processing device.

Advantageously, delegating all the processing related to the generation of the notification to the mobile processing device allows to preserve the battery of the resource-constrained device and extend its power-cycle.

The resource constrained device can comprise a battery with a capacity of less than 1 Ah.

The notification generated by the mobile processing device can be push notification for notifying a user of the reception of an electronic communication.

In an embodiment, the resource constrained device is a wearable device such as a connected watch, a connected bracelet, a fitness tracker, a connected health monitoring device or an augmented reality device.

In one embodiment, the mobile processing device is a smartphone, a tablet, a PC or a connected watch.

In an embodiment, the step of transmitting the notification image from the mobile processing device to a resource-constrained device is executed following a network protocol selected among: Wi-Fi, Bluetooth, Bluetooth Low Energy, AMQP, Cellular, CoAP, DDS, LoRa, LoRaWAN, XMPP, LWM2M, MQTT, Z-Wave, Zigbee, or any proprietary radio protocol.

In an embodiment, the step of generating a notification comprises the processing of at least a character, an encoded character or an image.

In an embodiment, the step of generating a notification comprises a sub-step of text shaping, word and/or line breaking, bidirectional text support and/or text rendering.

In one embodiment, the method further comprises a step of compressing the notification image to reduce a transmission cost of the notification image from the mobile processing device to the constrained resource device.

In one embodiment, the format of the notification image is selected among the following formats: BMP, AVIF, PNG, SVG, JPG/JPEG, BPG, WebP, CLUT-based format or any proprietary image format.

These goals are also achieved by means of a system for offloading notification processing comprising:
a mobile processing device;
a resource-constrained device connected to the mobile processing device through a wireless network;
characterized in that it is adapted to carry out the computer implemented method described above.

In one embodiment, the resource constrained device is a wearable device such as an electronic watch, a connected bracelet or an augmented reality device.

In one embodiment, the mobile processing device is a smartphone, a tablet, a PC or a connected watch.

In one embodiment, the wireless network operates following a network protocol selected among: Wi-Fi, Bluetooth, Bluetooth Low Energy, AMQP, Cellular, CoAP, DDS, LoRa, LoRaWAN, XMPP, LWM2M, MQTT, Z-Wave, Zigbee, or any proprietary radio protocol.

### Short description of the drawings

Exemplar embodiments of the invention are disclosed in the description and illustrated by the drawings in which:
Fig. 1 is a flowchart of the main steps of the invention.
Fig. 2 is a flowchart of the main steps of the invention with an optional compression step.
Fig. 3 illustrates schematically a system comprising a mobile processing device wirelessly connected to a resource-constrained device.

### Examples of embodiments of the present invention

The present invention concerns a computer implemented method for offloading the processing of a notification from a resource-constrained device 30 having limited or restricted processing power.

In the context of the present disclosure, the expression "resource-constrained device" designates a device having limited processing and storage capabilities designed for low energy consumption. Such devices usually have limited energy supply, typically limited battery life. As a limitation, the considered resource-constrained devices must include a display capable of displaying an image to its user.

The capacity, or autonomy, of a resource-constrained device is usually measured in ampere-hour (Ah). In one embodiment, the ressource-constrained device of the present invention has a capacity of at most 1 Ah, preferably at most 500 mAh (milli ampere-hour).

In particular, resource-constrained devices as considered in this text include all kind of wearable devices such as connected watches (also called smartwatches), connected bracelets, connected health monitoring devices, fitness trackers, safety/location devices, smart glasses, augmented reality devices, smart clothing, hearable devices, payment wearables, etc.

All those resource-constrained devices 30 are intended to be wirelessly connected to a mobile processing device 20 having higher processing, memory and/or power supply capacities. Typically, this category of mobile processing devices includes smartphones, tablets, gaming devices, wearables with high processing/memory/battery capacity, laptops, PCs etc. More generally, any mobile device capable of efficiently (i.e. without compromising its basic functionalities) processing electronic communications is considered to be a mobile processing device.

Some of the functionalities of the mobile processing device 20 can be extended to the resource-constrained device 30. In particular, the resource-constrained devices are well-suited to alert its user that an event occurred on the mobile processing device, typically by means of a notification (also called "push notification"). Indeed, these connected resource-constrained devices are usually disposed in the direct proximity or even worn by their users so that providing a notification on those devices has an increase chance to get the user's attention. However, as mentioned above, the generation (i.e. the processing and/or rendering) of a notification based on a received electronic communication can compromise the autonomy of a resource-constrained device, especially if a high number of notifications are generated during the use time of the device.

The expression electronic communication refers to any type of digital message that can be sent to a mobile processing device 20 including, but not limited to, emails, instant messaging (i.e. real-time text-based communications), text messaging (i.e. SMS), voice over internet protocol (VoIP), video conferencing, phone calls, etc. The electronic communication may also refer to a digital message emitted by the mobile processing device 20 itself, for example to provide information on a process being executed on the mobile processing device 20 (e.g. software installation status, information about a battery status, alarm, etc).

Hence an electronic communication can refer to any digital communication between humans, between a processing device and a human or even between processing devices without any human intervention. Any such communication can give rise to a notification destinated to the user of the mobile processing device.

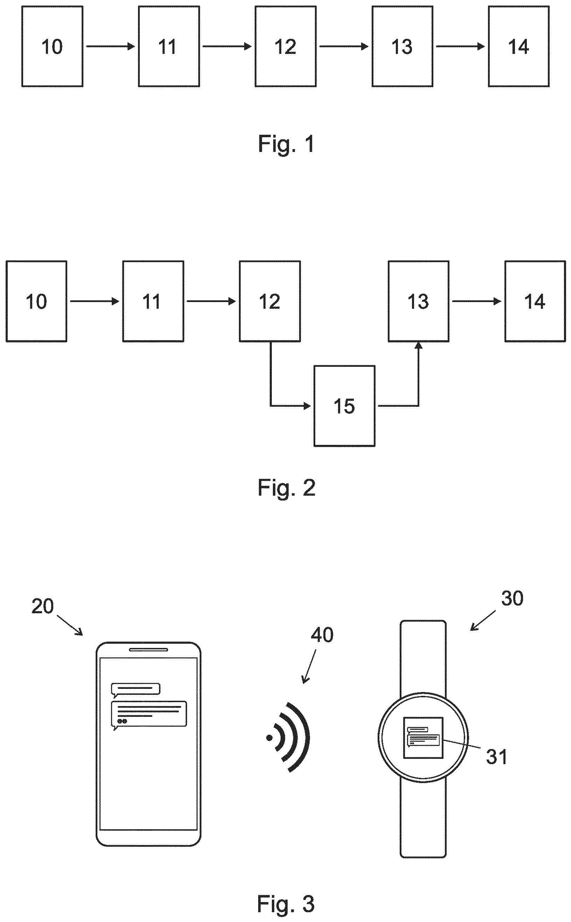

With reference to Fig. 1 the method comprises a first step of receiving an electronic communication 10 on a mobile processing device 20.

In reaction to the reception of an electronic communication, the method comprises a second step of generating a notification 11 on the mobile processing device 20 based on the electronic communication.

In a preferred embodiment, the mobile processing device 20 is a smartphone/tablet. In this typical embodiment, the notification can be generated by the operating system and/or directly by a dedicated software such as a mobile app, depending on the type of electronic communication.

A notification typically comprises several different elements such as text element or an image representing a fraction of the electronic communication (e.g. the first words of a text message, encoded characters corresponding to an emoji), a logo (e.g. the logo of a mobile app to which the electronic communication relates), an image (e.g. the picture associated to a contact from which the communication is coming, a frame of a video), etc. Moreover, it can be displayed in various ways such as in the form of a banner, a pop-up, etc.

Advantageously the notification can be a push notification, i.e. an alert such as a pop-up or other message generated by an application when the application has not yet been open to consult the content of the related communication. A push notification typically serves to notify the user of a new message, update, social media post, etc.

These notifications elements have to be processed to form the notification that is to be displayed to the user. This processing includes, in general, text processing (layout, font, line breaking, etc.), retrieving images corresponding to encoded characters, laying out the notification, eventual compression or image processing steps, etc. These processing steps may be demanding for resource-constrained devices processors and/or battery capacities.

Advantageously, the present invention proposes to delegate this processing tasks to the mobile processing device to which the resource-constrained device is connected. After the notification has been generated by the mobile processing device, a notification image is generated by the mobile processing device from the notification and transmitted to the resource-constrained device for displaying it on a display of the device. It thus preserves the resource-constrained device from processing the notification as described above and allows consequent extension of the battery life.

Hence, the third step of the present method comprises the generation of a notification image 12 on the mobile processing device 20 based on the notification.

The notification image is an image file created by the mobile processing device 20. The visual elements forming the notification image may be the same as the visual elements forming the notification in the sense that the notification image can be a mere copy of the notification.

Alternatively or complementarily, the generation of notification image also involves one or more processing steps. In particular, when the format of the notification is not an image format, then a step of converting the notification into an image format can be required. As a non-limitative example, such a conversion may involve generating from the textual content of the notification a framebuffer displaying the text and converting into an image. It may be the case that the notification contains video elements or more generally elements varying through time. In this case, the notification image can be a particular frame of the video, a processed frame of the video or a caption of the element varying through time.

In an embodiment, only a fraction of the notification or of its content is considered to generate the notification image. This can serve the purpose of reducing the size of the notification image and/or can be purely visual considerations.

It may also be required to reduce the size of the notification to create a notification image that can be efficiently transmitted to the resource-constrained device. Therefore the method may include an optional image compression step 15 as illustrated in Fig. 2. This compression step may be part of the generation of the notification image as most of image formats suitable for efficient transmission already include lossless or lossy compression in the encoding. However, it may also be an additional compression step in order to comply with the wireless network and protocol used for transferring data from the mobile processing device 20 to the resource-constrained device 30.

In an embodiment, this step is carried out by a dedicated software in the mobile processing device 20. Its execution causes the generated notification to be retrieved and a notification image to be created based on the notification.

Habitually, the steps of generating the notification itself are carried out by the existing OS via and/or by dedicated software (such as an app) of the mobile processing device connected to the resource-constrained device 30.

Although the notification image can be virtually in any image format, it is advantageous in the context of the present invention to that it is an image format suited to energy efficient transmission. Typically Colour-Lookup Table (CLUT) based format or compressed image formats are well suited for the notification image. In particular, the notification image can be generated in a format such as AV1 Image File Format (AVIF), Portable Network Graphic (PNG), Scalable Vector Graphic (SVG), Joint Photographic Expert Group (JPG/JPEG), Better Portable Graphics (BPG), WebP, and/or any custom proprietary format.

The format of the notification image 13 is typically guided by the constraints that it has to be easily handled (e.g. simple bitmap) and/or compressed (e.g. CLUT-based).

The method comprises a fourth step of transmitting the notification image 13 from the mobile processing device 20 to a resource-constrained device 30 through a wireless network 40.

Numerous wireless connection protocols can be implemented on the wireless network. As per the image format, energy efficient (low-consuming) protocols are privileged in the context of the present invention.

In an embodiment, the wireless protocol is selected among the following protocols: Wi-Fi, Bluetooth, Bluetooth Low Energy (BLE), Advance Message Queuing Protocol (AMQP), Mobile/Cellular protocols, Constrained Application Protocol (CoAP), Data Distribution Service (DDS), Long-Range Wide-Area Network (LoRa/ LoRaWAN), Extensible Messaging and Presence Protocol (XMPP), Lightweight Machine to Machine (LWM2M), Message Queuing Telemetry Transport (MQTT), Z-Wave or Zigbee. More generally, any proprietary radio protocol can be used for transmitting the notification image from the mobile processing device 20 to the resource-constrained device 30.

After its transmission to the resource-constrained device 30, the notification image is displayed 14 on a display 31 of the resource-constrained device 30. The display 31 can be any type of display capable of displaying an image file, typically LCD, OLED, AMOLED, TFT, etc. Usually resource-constrained devices privilege low-consuming display technology to extend the battery life. The display 31 is therefore preferentially a low power consuming display.

In a preferred embodiment illustrated in Fig. 3, the mobile processing device 20 is a smartphone and the resource-constrained device 30 is a smartwatch connected to the smartphone via a wireless network 40, preferably via Wi-fi or BLE. The method of the present application can therefore be executed on those devices by:
- receiving an electronic communication on the smartphone, typically an email or an instant message;
- generating a notification on the smartphone using a dedicated app or the mobile OS of the smartphone to notify a user that an electronic communication has been received (from an external device or from the smartphone itself);

- generating a notification image based on the notification, typically in an image format adapted to narrow band data transmission such as WebP, SVG, BMP or CLUT-based format;
- transmitting the notification image from the smartphone/tablet to the smartwatch using a wireless network such as Wi-Fi, BLE, etc.
- displaying the notification image on a display screen of the smartwatch to notify its wearer of the received electronic communication;

The present invention is also related to a system adapted for carrying out the steps of the method described above and comprising a mobile processing device 20 and a resource-constrained device 30 connected to the mobile processing device through a wireless network 31.

In particular, the mobile processing device 20 is adapted for carrying out the steps of
receiving an electronic communication;
generating a notification based on the electronic communication for notifying a user that an electronic communication has been received on the mobile processing device;
generating a notification image based on the notification;
and the resource-constrained device 30 is adapted to display the notification image on a display so as to notify a user of the resource-constrained device that a notification has been received on the mobile processing device.

Throughout the present disclosure, the user of the mobile processing device 20 and the user of the resource-constrained device 30 may be the same or may be two different users.

The mobile processing device of the system is typically a smartphone, a tablet, a PC or a connected watch.

### Reference numerals

- 10: Reception of electronic communication
- 11: Notification generation
- 12: Notification image generation
- 13: Wireless transmission of the notification image
- 14: Display of the notification image on resource-constrained device
- 15: Notification image compression
- 20: Mobile processing device
- 30: Resource-constrained device
- 31: Display of the resource-constrained device
- 40: Wireless network

## Claims

1. Computer-implemented method for offloading notification processing comprising the steps of:
receiving an electronic communication (10) by a mobile processing device (20);
generating a notification (11) by the mobile processing device (20) based on the electronic communication for notifying a user of the mobile processing device that the electronic communication has been received on the mobile processing device;
generating a notification image (12) by the mobile processing device (20) based on the notification;
transmitting the notification image (13) from the mobile processing device (20) to a resource-constrained device (30) through a wireless network (40);
displaying the notification image (14) on a display (31) of the resource-constrained device (30) so as to notify a user of the resource-constrained device that a notification has been received on the mobile processing device (20).

2. Computer implemented method according to claim one, wherein the resource constrained device (30) is a wearable device such as a connected watch, a connected bracelet, a fitness tracker, a connected health monitoring device or an augmented reality device.

3. Computer implemented method according to any of the claims 1 to 2, wherein the resource constrained device (30) comprises a battery with a capacity of less than 1 Ah.

4. Computer implemented method according to any of the claims 1 to 3 , wherein the notification is a push notification

5. Computer implemented method according to any of the claims 1 to 4, wherein the mobile processing device (20) is a smartphone, a tablet, a PC or a connected watch.

6. Computer implemented method according to any of the claims 1 to 5, wherein the step of transmitting the notification image (13) from the mobile processing device (20) to a resource-constrained device (30) is executed following a network protocol selected among: Wi-Fi, Bluetooth, Bluetooth Low Energy, AMQP, Cellular, CoAP, DDS, LoRa, LoRaWAN, XMPP, LWM2M, MQTT, Z-Wave or Zigbee.

7. Computer implemented method according to any of the claims 1 to 6, wherein the step of generating a notification (11) comprises the processing of at least a character, an encoded character or an image of the electronic communication.

8. Computer implemented method according to any of the claims 1 to 7, wherein, the step of generating a notification image (12) comprises text shaping, word and/or line breaking, bidirectional text support and/or text rendering.

9. Computer implemented method according to any of the claims 1 to 8, further comprising a step of:
compressing the notification image (15) to reduce a transmission cost of the notification image from the mobile processing device (20) to the resource-constrained device (30).

10. Computer implemented method according to any of the claims 1 to 9, wherein a format of the notification image is selected among: AVIF, PNG, SVG, JPG/JPEG, BPG WebP, BMP or CLUT-based format.

11. System for offloading notification processing comprising
a mobile processing device (20);
a resource-constrained device (30) connected to the mobile processing device through a wireless network (40);
**characterized in that** it is adapted to carry out the computer implemented method of any of the claims 1 to 10.

12. System according to the preceding claim, wherein the resource constrained device (30) is a wearable device such as an electronic watch, a connected bracelet or an augmented reality device.

13. System according to to any of the claims 11 to 12, wherein the mobile processing device (20) is a smartphone, a tablet, a PC or a connected watch.

14. System according to any of the claims 11 to 13, wherein the wireless network (40) operates following a network protocol selected among: Wi-Fi, Bluetooth, Bluetooth Low Energy, AMQP, Cellular, CoAP, DDS, LoRa, LoRaWAN, XMPP, LWM2M, MQTT, Z-Wave or Zigbee.
